Europäisches Patentamt

European Patent Office

Office européen des brevets

(11) Veröffentlichungsnummer: **0 216 232 B1**

## (12) EUROPÄISCHE PATENTSCHRIFT

(45) Veröffentlichungstag der Patentschrift: **24.07.91**

(21) Anmeldenummer: **86112363.6**

(22) Anmeldetag: **06.09.86**

(51) Int. Cl.⁵: **G02F 1/133**

(54) **Flüssigkristallanzeige.**

(30) Priorität: **12.09.85 DE 3532486**

(43) Veröffentlichungstag der Anmeldung:
**01.04.87 Patentblatt 87/14**

(45) Bekanntmachung des Hinweises auf die
Patenterteilung:
**24.07.91 Patentblatt 91/30**

(84) Benannte Vertragsstaaten:
**BE DE FR GB IT NL**

(56) Entgegenhaltungen:
**WO-A-85/02915**
**CH-A- 647 876**
**US-A- 4 094 058**
**US-A- 4 099 550**

(73) Patentinhaber: **Nokia Unterhaltungselektronik**
**(Deutschland) GmbH**
**Östliche Karl-Friedrich-Strasse 132**
**W-7530 Pforzheim(DE)**

(72) Erfinder: **Zondler, Rolf, Dr.**
**Marabustrasse 26**
**W-7000 Stuttgart 50(DE)**
Erfinder: **Pottharst, Jürgen, Dr.**
**Onstmettinger Weg 9**
**W-7000 Stuttgart 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zum Herstellen einer Flüssigkristallanzeige gemäß dem Oberbegriff des Anspruchs 1.

Aus der Zeitschrift IBM Technical Disclosure Bulletin, Vol. 16, No. 2, July 1973, Seite 395 und 396 ist eine Flüssigkristallzelle bekannt, die zwischen zwei Substraten und einem Abstandsrahmen einen Flüssigkristall einschließt. Die Zelle hat ein einziges Loch, durch das der Flüssigkristall im Vakuum eingebracht wird. Hierzu wird die Zelle in ein Gefäß gebracht, in dem ein Becher mit dem Flüssigkristall vorhanden ist und das evakuiert wird. Dann wird die Zelle mit dem Loch in den Flüssigkristall getaucht und das Gefäß belüftet. Der Flüssigkristall wird durch den Luftdruck in die Zelle gedrückt. Danach wird das Loch hermetisch verschlossen.

In WO 85/02915 wird ein kontinuierliches Verfahren zum Herstellen von Flüssigkristallzellen angegeben. Danach werden zwei flexible Substratstreifen, von denen ein Substratstreifen mit Abstandshaltern und einem Kleberahmen versehen ist, über Rollen so zusammengeführt, daß sich zwischen den Substratstreifen ein Zwischenraum bildet. In diesen Zwischenraum wird über eine Düse der Flüssigkristall gespritzt. Hierbei wird die Viskosität des Flüssigkristalls über eine Temparatursteuerung der jeweiligen Vorschubgeschwindigkeit der beiden Substratstreifen angepaßt. Sodann werden in den nachfolgenden Schritten die Substratstreifen aufeinandergedrückt, miteinander verschweißt und auseinandergeschnitten.

Der Erfindung liegt die Aufgabe zugrunde, ein Verfahren zum Herstellen einer Flüssigkristallanzeige anzugeben, bei dem das Einbringen des Flüssigkristalls vereinfacht ist.

Die Lösung dieser Aufgabe erfolgt mit den im Anspruch 1 angegebenen Verfahrensschritten. Eine vorteilhafte Ausgestaltung der Erfindung ist im Anspruch 2 angegeben.

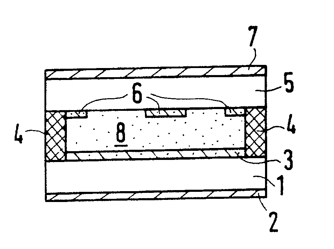

Die Erfindung wird nun anhand eines in der Zeichnung dargestellten Ausführungsbeispieles näher erläutert. Die einzige Figur zeigt eine Flüssigkristallanzeige im Querschnitt.

Ein erstes Substrat 1 ist auf einer Seite, in der Figur auf der unteren Seite, mit einem Polarisationsfilter 2 und auf der anderen Seite mit einer transparenten Elektrode 3 versehen. Durch den Abstandsrahmen 4 ist das erste Substrat 1 mit dem zweiten Substrat 5 verbunden. Das zweite Substrat 2 weist auf der einen, zum ersten Substrat zeigenden Seite transparente Elektroden 6 auf, die dem anzuzeigenden Muster entsprechen. Auf der anderen Seite trägt das zweite Substrat 5 ein Polarisationsfilter 7. Der von den Substraten 1 und 5 und dem Abstandsrahmen 4 gebildete Raum nimmt den Flüssigkristall 8 auf.

Die Substrate 1 und 5 können aus Glas, Kunststoff oder einem anderen geeigneten Material bestehen. Sie können die Abmessungen einer Flüssigkristallanzeige haben, aber auch eine größere Fläche aufweisen, auf der mehrere Flüssigkristallanzeigen gleichzeitig hergestellt werden können. Der Abstandsrahmen 4 kann auch aus einem Abstandskörper bestehen, der die Flüssigkristallanzeige in mehrere Anzeigebereiche unterteilt. Ebenso ist es auch möglich, daß im Flüssigkristall Glaskugeln oder Glasfaserteilchen als Abstandshalter vorhanden sind. Auf der Polarisationsfolie 2 ist beim Reflexionsbetrieb der Flüssigkristallanzeige ein Spiegel angebracht (nicht gezeigt), der beim Transmissionsbetrieb entfällt oder weggeklappt wird.

Da Flüssigkristallanzeigen an sich bekannt sind, wird hier nicht auf weitere Einzelheiten eingegangen.

Bei der Herstellung der Flüssigkristallanzeige wird wie folgt vorgegangen:
Auf das entsprechend vorbereitete erste Substrat 1 wird der Abstandsrahmen 4 aufgebracht. Dann wird der Flüssigkristall 8 in den Abstandsrahmen durch einen Druckvorgang eingebracht. Hierzu wird der Flüssigkristall soweit abgekühlt, bis er pastös ist, d.h., bis er eine zum Drucken ausreichende Viskosität aufweist. Nun wird das entsprechend vorbereitete zweite Substrat 5 auf den Abstandsrahmen 4 gelegt und dieser mit den beiden Substraten 1 und 5 fest verbunden und dicht verschlossen. Wenn die beiden Substrate noch nicht mit den Polarisationsfiltern versehen sind, so werden diese jetzt aufgebracht.

Zum Drucken des gekühlten Flüssigkristalls 8 kann beispielsweise ein Siebdruck, ein Walzendruck oder ein Tampondruck verwendet werden. Beim Siebdrucken ist es günstig, den Druckraum entsprechend zu kühlen. Beim Walzendruck reicht es aus, wenn die Walze und beim Tampondruck, wenn die Druckplatte gekühlt ist.

Das Verschließen der Flüssigkristallanzeige erfolgt je nach den verwendeten Materialien der beiden Substrate und des Abstandsrahmens beispielsweise durch Verkleben oder Verschweißen.

## Patentansprüche

1. Verfahren zum Herstellen einer Flüssigkristallanzeige, die zwischen zwei Substraten und einem Abstandsrahmen einen Flüssigkristall enthält,

   enthaltend folgende und in ihrer zeitlichen Abfolge angegebenen Schritte:
   - Schritt 1:
     Aufbringen des Abstandsrahmens (4) auf das eine der beiden entsprechend vorbereiteten Substrate (1),
- Schritt 2:
Befüllen des vom Abstandsrahmen (4) und dem Substrat (1) gebildeten Raumes mit Flüssigkristall (8), in dem ein durch Abkühlung pastöser Flüssigkristall (8) in Drucktechnik, sei es als Sieb-, Walzen-oder Tampondruck, auf die vom Abstandsrahmen (4) umgrenzte Fläche des Substrats (1) aufgebracht wird,
- Schritt 3:
Abdecken des Abstandsrahmens (4) mit dem anderen entsprechend vorbereiteten zweiten Substrat (5) und festes Verbinden und dichtes Verschließen der beiden Substrate (1, 5) mit dem Abstandsrahmen (4).

2. Verfahren nach Anspruch 1,

dadurch gekennzeichnet,

daß der Flüssigkristall (8) erst unmittelbar vor dem eigentlichen Druckvorgang in die pastöse Phase überführt wird, indem beim Siebdruck der Druckraum und beim Walzen-oder Tampondruck die Walze beziehungsweise der Stempel gekühlt ist.

## Claims

1. A method of producing a liquid crystal display in which a liquid crystal is contained between two substrates and a spacer frame, the said method consisting of the following steps, which are here stated in their correct temporal sequence:
   - Step 1: Application of the spacer frame (4) to one of the two appropriately prepared substrates (1),
   - Step 2: filling of the space constituted by the spacer frame (4) and the substrate (1) with liquid crystal (8) by using screen, roller or tampon printing technique to apply a liquid crystal (8) that has been rendered pasty by cooling to the surface of the substrate (1) delimited by the spacer frame (4),
   - Step 3: covering the spacer frame (4) by the other appropriately prepared substrate (5) and firmly and hermetically jointing the two substrates (1,5) to the spacer frame (4).

2. A method in accordance with Claim 1, **characterized in that** the liquid crystal (8) is brought into the pasty condition only just before the actual printing process by arranging for the printing space (in the case of screen printing) and the roller or tampon (in the case, respectively, of roller or tampon printing) to be appropriately cooled.

## Revendications

1. Procédé de fabrication d'un affichage à cristaux liquides, contenant un cristal liquide entre deux substrats et un cadre d'espacement, caractérisé par les opérations successives suivantes:
   - 1ère opération:
   montage du cadre d'espacement (4) sur l'un des deux substrats (1) préparé en conséquence,
   - 2ème opération:
   remplissage de l'espace formé par le cadre d'espacement (4) et le substrat (1) avec du cristal liquide (8), en appliquant un cristal liquide (8), rendu pâteux par refroidissement, par technique d'impression, soit par sérigraphie, impression au rouleau ou au tampon, sur la surface du substrat (1) délimitée par le cadre d'espacement (4),
   - 3ème opération:
   recouvrement du cadre d'espacement (4) avec l'autre substrat (5) préparé en conséquence et liaison fixe et fermeture étanche des deux substrats (1, 5) avec le cadre d'espacement (4).

2. Procédé selon la revendication 1,

caractérisé en ce que

le cristal liquide (8) n'est transmis dans la phase pâteuse que juste avant le procédé d'impression proprement dit, en héliographie l'espace d'impression étant refroidi, et en impression à tambour ou tamponnage, le tambour ou le tampon.